# EUROPÄISCHE PATENTSCHRIFT

(11) **EP 1 209 704 B1**
(45) Veröffentlichungstag und Bekanntmachung des Hinweises auf die Patenterteilung: **17.09.2008**
(21) Anmeldenummer: 01126932.1
(22) Anmeldetag: 13.11.2001
(51) Int. Cl.: H01F 17/06, H01F 27/42

(54) **Drosselspule mit einem Kern aus ferromagnetischem Material**
Choke coil with ferromagnetic material core
Inductance avec noyau en matériau ferromagnétique

(30) Priorität: 25.11.2000 DE 10058631
(43) Veröffentlichungstag der Anmeldung: 29.05.2002
(73) Patentinhaber: Hella KGaA Hueck & Co., 59552 Lippstadt (DE)
(72) Erfinder: Temmen, Dieter, 44369 Dortmund (DE)

(56) Entgegenhaltungen:
- WO-A-99/28931
- DE-A- 19 843 465
- US-A- 4 626 815

## Beschreibung

Die Erfindung bezieht sich auf eine Schaltung mit einer Drosselspule mit einem Kern aus ferromagnetischem Material zur Unterdrückung von hochfrequenten Störsignalen in der elektrischen Schaltung. Eine derartige Drosselspule ist beispielsweise aus der DE 198 08 341 A1 bekannt. Bei dieser Drossel trägt der Kern zwei Teilwicklungen, die in einem Schaltkreis in Reihe geschaltet und gegensinnig zueinander gewickelt sind. Aufgrund der unterschiedlichen Stromfiihrungsrichtungen durch die beiden Teilwicklungen wird dabei eine sogenannte stromkompensierte Drossel geschaffen. Dabei werden durch die beiden Teilwicklungen jeweils gegensinnig zueinander orientierte Magnetfelder aufgebaut, die sich überlagern und kompensieren, so daß eine Vormagnetisierung des Kerns, insbesondere eine Sättigungsmagnetisierung, vermieden wird, welche ansonsten die Drosselwirkung beeinträchtigen oder gar zunichte machen würde.

Aus der DE 198 43 465 A1 ist eine Entstördrossel mit einem Kern und drei darauf angeordneten Wicklungen bekannt, die in einem Wechselspannungsnetz eingesetzt wird. Dabei wird die Magnetfeldkompensation dadurch bewirkt, daß die Wechselspannungen eine Phasenverschiebung von 120° zueinander haben.

Die Verwendung eines ferromagnetischen Kerns mit drei Wicklungen in einer Wechselspannungsschaltung ist ferner auch aus der US 4,626, 815 bekannt.

Eine gattungsgemäße Schaltung, welche sämtliche Merkmale aus dem Oberbegriff des Patentanspruchs 1 aufweist, ist aus dem Dokument US 5,725,615 bekannt.

Aufgabe der Erfindung ist die Weiterentwicklung einer Schaltung gemäß US 5,725,615, so dass eine Sättigungsmagnetisierung des Kerns vermieden wird.

Diese Aufgabe wird durch die Merkmale des Patentanspruches 1 gelöst.

Auf diese Weise wird in einfacher und kostengünstiger Weise bei Verwendung von nur einem Kern und drei Wicklungen eine Schaltung mit einer stromkompensierten Drossel für zwei Schaltkreise eines Zweispannungssystems geschaffen, bei der eine Sättigungsmagnetisierung des Kerns vermieden wird. Bei Verwendung einer Drosselspule gemäß DE 198 08 341 A1 wären hierfür zwei Kerne und 4 Wicklungen notwendig gewesen. Der Umstand, daß nur ein Kern - anstelle von sonst zweien - benötigt wird, hat darüber hinaus den Vorteil der Platz- und Gewichtsersparnis.

Die Erfindung bezieht sich mit anderen Worten auf ein Mehrspannungssystem, bestehend aus zwei oder mehreren Schaltkreisen zur Ansteuerung und/oder zum Betrieb von einer oder mehreren elektrischen Einrichtungen, wobei die Schaltkreise stromführende Hinleiter aufweisen, die sich auf verschiedenen Spannungspotentialen befinden, und stromführende Rückleiter aufweisen, die sich auf einem gemeinsamen Spannungspotential befinden. Dabei ist die Strombilanz so, daß die Summe der Ströme, die über die Hinleiter fließen gleich der Summe der Ströme ist, die über die Rückleiter fließen. Die der Erfindung zugrunde liegende Idee ist es, Hinleiter mit gleichem Spannungspotential zusammenzufassen und über eine gemeinsame vom Kern getragene Wicklung zu führen und anschließend wieder aufzuteilen. Zur Vermeidung der störenden Sättigungsmagnetisierung werden nun alle Rückleiter, die sich ja auf gleichem Spannungspotential befinden, zusammengefasst und über eine gemeinsame vom Kern getragene Wicklung geführt und danach gegebenenfalls wieder aufgeteilt.

Anhand der beigefügten Zeichnungen soll die Erfindung nachfolgend näher erläutert werden. Es zeigt:
- Figur 1: ein Zweispannungssystem mit zwei Schaltkreisen zum Betrieb von zwei elektrischen Verbrauchern,
- Figur 2: ein Zweispannungssystem zum Betrieb eines elektrischen Verbrauchers über einen Gleichspannungswandler,
- Figur 3: eine Draufsicht auf die erfindungsgemäße Drosselspule,
- Figur 4: eine Seitenansicht der erfindungsgemäßen Drosselspule,
- Figur 5: die Ansicht eines Zweispannungssystems wie in der Figur 1, jedoch mit einem Ringkern in der abgerollten Darstellung.

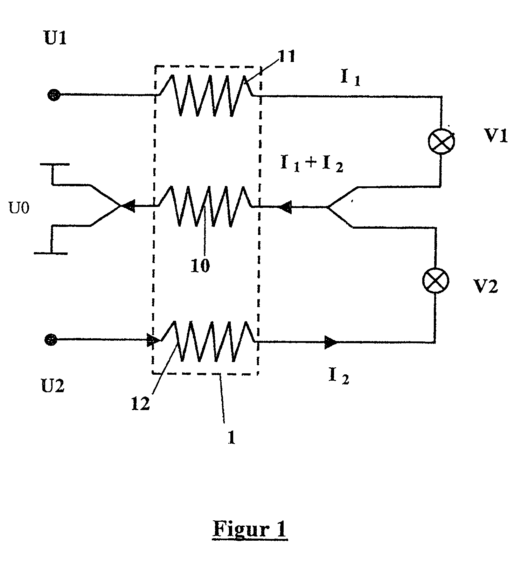

Figur 1 zeigt ein Zweispannungssystem zum Betrieb von zwei elektrischen Verbrauchern (V1, V2), die mit unterschiedlichen Spannungen (U₁, U₂) zu betrieben sind. Der erste Schaltkreis besteht aus einem Strompfad, der auf dem Spannungspotential U₁ liegt und als Hinleiter für den Strom (I ₁) zum Verbraucher (V1) dient, sowie einem Strompfad, der auf Massepotential liegt und als Rückleiter für den Strom (I ₁) vom Verbraucher (V1) weg dient. Der zweite Schaltkreis besteht aus einem Strompfad, der auf dem Spannungspotential U₂ liegt und als Hinleiter für den Strom (I ₂) zum Verbraucher (V2) dient, sowie einem Strompfad, der auf Massepotential liegt und als Rückleiter für den Strom (I ₂) vom Verbraucher (V2) weg dient. Dabei sind die beiden äquipotentialen Rückleiter zu einem gemeinsamen Referenzstrompfad (I ₁ + I ₂ ) zusammengefasst und über eine gemeinsame Wicklung (10) geführt. Zu diesem Zweck weisen die Anschlussleitungen dieser Wicklung (10) vorzugsweise jeweils eine Verzweigung/Knotenpunkt (10A, 10B) jeweils zum Anschluß der beiden Rückleiter-Strompfade auf. Es ist jedoch auch vorgesehen, daß eine Anschlußleitung dieser Wicklung (10) keine Verzweigung aufweist, wobei der Rückleiter dort dann einadrig verläuft. In einer weiteren Ausführungsform ist es vorgesehen, daß keine der Anschlußleitungen dieser Wicklung (10) eine Verzweigung aufweist, so daß beide Schaltkreise sich einen einzigen einadrigen Masse-Rückleiter teilen. Neben der Rückleiter-Wicklung (10) sind noch zwei Wicklungen (11, 12) für die spannungsungleichen Hinleiter vorgesehen. Alle drei Wicklungen (10, 11, 12) werden von einem gemeinsamen Kern (1) getragen, der hier durch die gestrichelte Linie nur angedeutet ist. Dabei sind die Windungszahlen der drei Wicklungen jeweils gleich groß, damit der magnetische Fluß (Φ₀), der durch den durch die Rückleiterwicklung (10) fließenden Strom (I ₁ + I ₂ ) erzeugt wird, auch durch die in den Hinleiterwicklungen (11, 12) erzeugten magnetischen Flüsse (Φ₁, Φ₂) kompensiert wird.

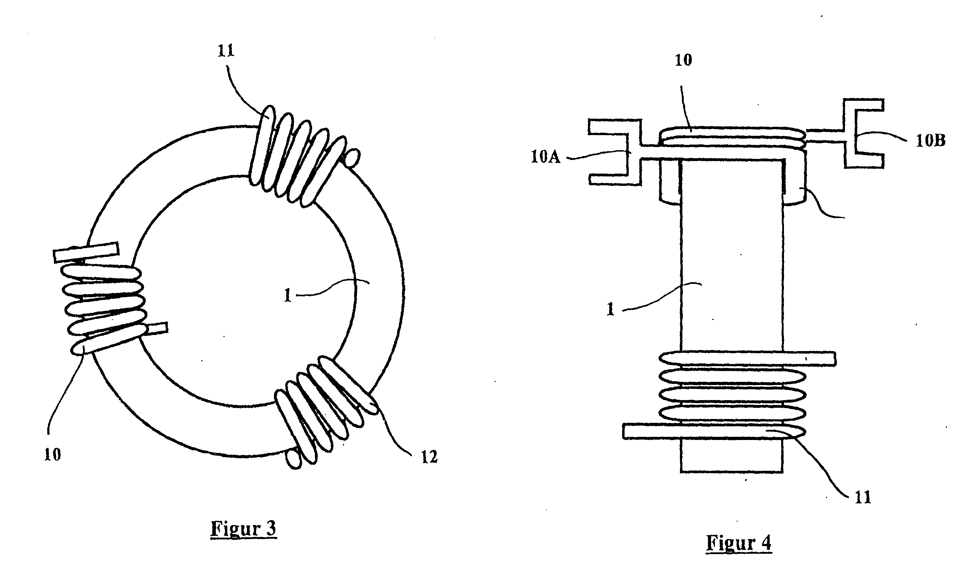

Der Kern (1) ist vorzugsweise als Kern mit einem geschlossenem magnetischen Weg, insbesondere als ringförmiger Kern (siehe Figur 3), ausgeführt, da diese Ausführung nur eine geringe magnetische Streuung aufweist. Dabei sind die drei Wicklungen (10, 11, 12) vorzugsweise im Abstand von 120⁰ auf dem Ringkern (1) angeordnet.

Es kann jedoch im Rahmen der Erfindung auch ein Kern mit einem reckteckigen Querschnitt oder auch ein nicht geschlossener Kern, wie zum Beispiel ein stabförmiger Kern, eingesetzt werden.

Figur 3 zeigt eine Draufsicht auf eine erfindungsgemäße Drosselspule mit einem ringförmigen Kern (1) und den drei Wicklungen (10, 11,12). Figur 4 zeigt eine entsprechende Seitenansicht dieser Drosselspule. Dort sind auch die Verzweigungen (10A, 10B) an den Anschlußleitungen der Rückleiter-Wicklung (10) zu erkennen.

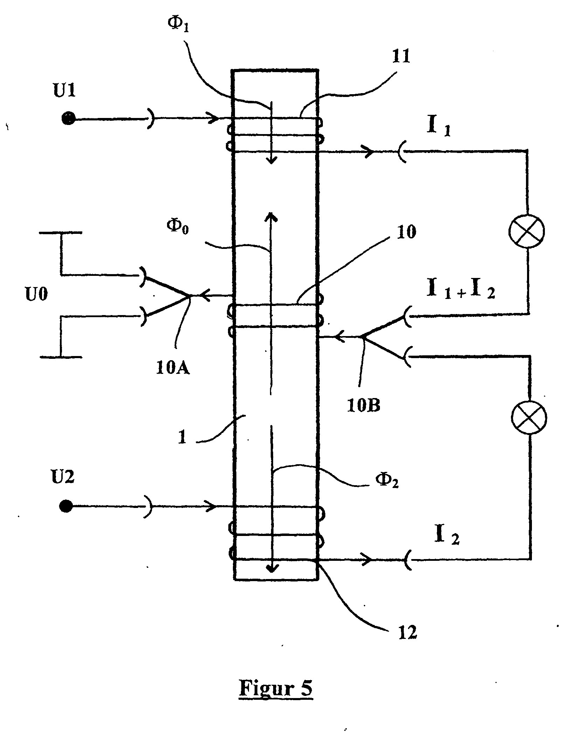

Figur 5 zeigt ein Zweispannungssystem wie in der Figur 1 mit einem Ringkern (1) in der abgerollten Darstellung und den darauf befindlichen Wicklungen (10, 11, 12). Dort sind auch die von dem Stromfluß durch die jeweilge Wicklung erzeugten magnetischen Flüsse (Φ₀, Φ₁, Φ ₂) symbolisch eingezeichnet. Im dargestellten Fall ist der Strom (I ₁ ), der durch die erste Wicklung (11) fließt, halb so groß wie der Strom (I ₂ ), der durch die dritte Wicklung (12) fließt, d.h. I ₂ = 2 I ₁ . Dementsprechend groß sind auch die magnetischen Flüsse. Da die Richtung des Stromflusses durch die erste Wicklung (11) und die zweite Wicklung (12) so geschaltet ist, dass die magnetischen Flüsse (Φ₁, Φ₂) gleichsinnig orientiert sind, addieren sich diese magnetischen Flüsse zu einem magnetischen Fluß von der Größe 3 Φ₁. Die Richtung des Stromflusses (I ₁ + I₂) durch die dritte Wicklung (10) ist so geschaltet, daß der von dem Strom (I ₁ + I ₂) in der dritten Wicklung (10) erzeugte magnetischer Fluß (H₀) gegensinnig zu den Flüssen in den beiden ersten Wicklungen (11,12) orientiert ist. Da die Windungszahlen der Wicklungen (10, 11, 12) gleich groß sind, wird der magnetischer Fluß insgesamt zu Null kompensiert.

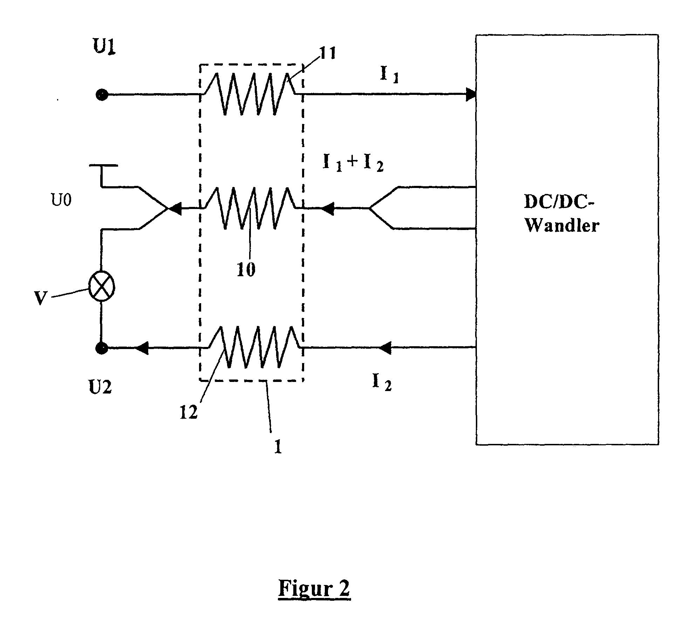

Figur 2 zeigt die Verwendung der erfindungsgemäßen Drosselspule in einer elektrischen Schaltung, die einen Gleichspannungswandler (DC/DC-Wandler) umfasst, um ausgehend von einem ersten Spannungspotential (U₁) ein zweites Spannungspotential (U₂) zur Verfügung zu stellen. Eine derartige Schaltung findet sich zum Beispiel in einem Zweispannungsbordnetz eines Kraftfahrzeuges, wo die Unterdrückung von hochfrequenten Störsignalen aus Gründen der elektromagnetischen Verträglichkeit sehr wichtig ist. Auch hier gibt es zwei Strompfade, die auf einem unterschiedlichen Spannungspotential liegen und zwei Strompfade, die auf einem gemeinsamen Spannungspotential (Masse) liegen.

## Patentansprüche

1. Schaltung mit einer Drosselspule mit einem Kern (1) aus ferromagnetischem Material zur Unterdrückung von hochfrequenten Störsignalen in der elektrischen Schaltung, wobei die Schaltung aus mindestens zwei Schaltkreisen besteht, wobei
- auf dem Kern (1) drei Wicklungen (10, 11, 12) angeordnet sind, deren Windungszahlen gleich groß sind,
- die Schaltung einen Gleichspannungswandler umfasst, der eine erste Spannung U₁ in eine zweite Spannung U₂ wandelt,
- der erste Schaltkreis einen Strompfad (I₁) aufweist, welcher auf dem ersten Spannungspotential U₁ liegt, und einen Strompfad aufweist, welcher auf einem Spannungspotential U₀ liegt,
- der zweite Schaltkreis einen Strompfad (I ₂ ) aufweist, welcher auf dem zweiten Spannungspotential U₂ liegt, und einen Strompfad aufweist, welcher auf dem Spannungspotential U₀ liegt,
- die erste Wicklung (11) in dem Strompfad (I ₁) mit dem Spannungspotential U₁ des ersten Schaltkreises angeordnet ist,
- die zweite Wicklung (12) in dem Strompfad (I₂) mit dem Spannungspotential U₂ des zweiten Schaltkreises angeordnet ist,
- die Richtung des Stromflusses (I ₁) durch die erste Wicklung (11) und die Richtung des Stromflusses (I ₂) durch die zweite Wicklung (12) so geschaltet sind, daß die von den beiden Strömen jeweils erzeugten magnetischen Flüsse (Φ₁, Φ₂) gleichsinnig orientiert sind,
**dadurch gekennzeichnet, dass**
- die Strompfade der beiden Schaltkreise, die auf dem gleichen Spannungspotential U₀ liegen, zu einem gemeinsamen Referenzstrompfad (I ₁ + I ₂ ) zusammengefasst sind,
- die dritte Wicklung (10) in dem gemeinsamen Referenzstrompfad (I ₁ + I ₂ ) angeordnet ist,
- die Richtung des Stromflusses (I ₁ + I ₂) durch die dritte Wicklung (10) so geschaltet ist, daß der von dem Strom (I ₁ + I ₂) in der dritten Wicklung (10) erzeugte magnetische Fluß (Φ₀) gegensinnig zu den magnetischen Flüssen in den beiden ersten Wicklungen (11,12) orientiert ist.

2. Schaltung nach Anspruch 1,
**dadurch gekennzeichnet, daß**
der Kern (1) als Kern mit einem geschlossenem magnetischen Weg ausgeführt ist.

3. Schaltung nach Anspruch 2,
**dadurch gekennzeichnet, daß**
dieselbe einen ringförmigen Kern (1) aufweist.

4. Schaltung nach Anspruch 3,
**dadurch gekennzeichnet, daß**
die drei Wicklungen (10, 11, 12) im Abstand von 120⁰ auf dem Ringkern (1) angeordnet sind.

5. Schaltung nach Anspruch 2,
**dadurch gekennzeichnet, daß**
dieselbe einen rechteckförmigen Kern (1) aufweist.

6. Schaltung nach einem der vorstehenden Ansprüche,
**dadurch gekennzeichnet, daß**
mindestens eine der Anschlußleitungen der dritten Wicklung (10) eine Verzweigung (10A, 10B) zum Anschluß der jeweils beiden Strompfade, welche auf dem Spannungspotential U₀ liegen, aufweist.

## Claims

1. Circuit arrangement with a choke coil comprising a core (1) of a ferromagnetic material to suppress high-frequency interference in the electric circuit, wherein the circuit arrangement consists of at least two circuits, where
- three windings (10, 11, 12) with the same number of turns are arranged along the core (1),
- the circuit arrangement includes a DC-to-DC converter which converts a first voltage U1 into a second voltage U2,
- the first circuit has a current path (11) to the first voltage potential U1 and a current path to a voltage potential Uo,
- the second circuit has a current path (12) to the second voltage potential U2 and a current path to the voltage potential Uo,
- the first winding (11) is arranged along the current path (11) with the voltage potential U1 of the first circuit,
- the second winding (12) is arranged along the current path (12) with the voltage potential U2 of the second circuit,
- the direction of the flow of current (11) through the first winding (11) and the direction of the flow of current (12) through the second winding (12) interlink such that the magnetic flux (θ1, θ2) generated by the two electric currents faces in the same direction in both cases,
**characterized in that**
- the current paths of the two circuits connected to the same voltage potential Uo combine to make up a joint reference current path (I1 + 12),
- the third winding (10) is arranged along the reference current path (I1 +I2),
- the direction of the flow of current (I1 + 12) through the third winding (10) is connected such that the magnetic flux (80) generated by the current (I1 + 12) in the third winding (10) faces the opposite direction as the magnetic flux in the first two windings (11, 12).

2. Circuit arrangement of claim 1,
**characterized in that**
the core (1) is designed as a core with a closed magnetic path.

3. Circuit arrangement of claim 2,
**characterized in that**
the circuit arrangement includes a circular (toroid) core (1).

4. Circuit arrangement of claim 3,
**characterized in that**
the three windings (10, 11, 12) are spread around the toroid core (1) at 120° distance.

5. Circuit arrangement of claim 2,
**characterized in that**
the circuit arrangement includes a rectangular core (1).

6. Circuit arrangement of one of the above claims,
**characterized in that**
at least one of the leads connecting the third winding (10) has branches (10A, 10B) to connect to the two current paths connected to voltage potential Uo.

## Revendications

1. Montage comprenant une bobine d'arrêt comportant un noyau (1) réalisé dans un matériau ferromagnétique et servant à supprimer des signaux parasites à haute fréquence, dans le montage électrique, où le montage se compose d'au moins deux circuits, où
- trois enroulements (10, 11, 12) sont disposés sur le noyau (1), enroulements dont les nombres de spires sont d'importance identique,
- le montage comprend un convertisseur continu-continu qui transforme une première tension U₁ en une deuxième tension U₂,
- le premier circuit présente un trajet de courant (I₁) qui se trouve sur le premier potentiel de tension U₁, et présente un trajet de courant qui se trouve sur un potentiel de tension U₀,
- le deuxième circuit présente un trajet de courant (I₂) qui se trouve sur le deuxième potentiel de tension U₂, et présente un trajet de courant qui se trouve sur le potentiel de tension U₀,
- le premier enroulement (11) est disposé dans le trajet de courant (I₁), en ayant le potentiel de tension U₁ du premier circuit,
- le deuxième enroulement (12) est disposé dans le trajet de courant (I₂), en ayant le potentiel de tension U₂ du deuxième circuit,
- la direction du flux de courant (I₁) à travers le premier enroulement (11) et la direction du flux de courant (I₂) à travers le deuxième enroulement (12) sont commutées de manière telle, que les flux magnétiques (Φ₁, Φ₂) produits respectivement par les deux courants soient orientés dans le même sens,
**caractérisé**
- **en ce que** les trajets de courant des deux circuits, qui se trouvent sur le même potentiel de tension U₀, sont regroupés pour former un trajet de courant de référence commun (I₁ + I₂),
- **en ce que** le troisième enroulement (10) est disposé dans le trajet de courant de référence commun (I₁ + I₂),
- **en ce que** la direction du flux de courant (I₁ + I₂) à travers le troisième enroulement (10) est commutée de manière telle, que le flux magnétique (Φ₀) produit dans le troisième enroulement (10), par le courant (I₁ + I₂), soit orienté en sens inverse par rapport aux flux magnétiques dans les deux premiers enroulements (11, 12).

2. Montage selon la revendication 1, **caractérisé en ce que** le noyau (1) est réalisé comme un noyau ayant un trajet magnétique fermé.

3. Montage selon la revendication 2, **caractérisé en ce que** celui-ci présente un noyau (1) de forme annulaire.

4. Circuit selon la revendication 3, **caractérisé en ce que** les trois enroulements (10, 11, 12) sont disposés, sur le noyau annulaire (1), à une distance de 120°.

5. Montage selon la revendication 2, **caractérisé en ce que** celui-ci présente un noyau (1) de forme rectangulaire.

6. Montage selon l'une quelconque des revendications précédentes, **caractérisé en ce qu'**au moins l'une des lignes de raccordement du troisième enroulement (10) présente une bifurcation (10A, 10B) servant au raccordement respectivement des deux trajets de courant qui se trouvent sur le potentiel de tension U₀.
